# EUROPÄISCHE PATENTSCHRIFT

(11) **EP 0 931 945 B1**
(45) Veröffentlichungstag und Bekanntmachung des Hinweises auf die Patenterteilung: **12.09.2001**
(21) Anmeldenummer: 98120735.0
(22) Anmeldetag: 02.11.1998
(51) Int. Cl.: F16B 37/04

(54) **Nutstein mit Formfeder**
Channel nut with formed spring
Ecrou avec ressort formé pour profilés

(30) Priorität: 22.01.1998 DE 29800988 U
(43) Veröffentlichungstag der Anmeldung: 28.07.1999
(73) Patentinhaber: RK Rose + Krieger GmbH & Co. KG Verbindungs- und Positioniersysteme, D-32423 Minden (DE)
(72) Erfinder: Lampert, Rolf, 32584 Löhne (DE)
(74) Vertreter: Stracke, Alexander, Dipl.-Ing.

(56) Entgegenhaltungen:
- FR-A- 2 604 759
- GB-A- 602 540
- US-A- 2 767 609
- US-A- 5 503 511

## Beschreibung

Die vorliegende Erfindung betrifft einen in eine hinterschnittene Nut eines Profilstabes einführbaren Nutstein gemäß dem Oberbegriff des Anspruches 1.

Ein derartiger Nutstein ist aus dem US-A-2 767 609 und dem DE-GM 90 13 802 bekannt.

Dabei dient die Formfeder der Fixierung des Nutsteines vor einem Verspannen in der Nut, so daß eine einfachere Montage des gesamten Verbindungssystems möglich ist.

Grundsätzlich hat sich diese bekannte Konstruktion bewährt. Jedoch ergeben sich hinsichtlich der Herstellung und Handhabung der Nutsteine Probleme, die einer optimalen Verwendung entgegenstehen.

So ist beispielsweise die Entnahme einzelner, als Schüttgut gelieferter Nutsteine mitunter problematisch, da sich die einseitig überstehenden Formfedern ineinander verhaken. Dies steht auch einer einfachen Kommissionierung entgegen, bei der eine exakte Zahl von Nutsteinen zu einer Losgröße zusammengefaßt wird.

Aber auch die Montage des Nutsteines selbst in dem Profilstab ist verbesserungswürdig, vor allem weil diese Nutsteine bestenfalls in einer Achsrichtung symmetrisch sind, so daß eine exakte Ausrichtung beim Einsetzen in die Nut erforderlich ist.

Darüber hinaus wird durch die einseitig vorstehende Formfeder ein Einschwenken der Nutsteine in die hinterschnittene Nut, wie dies vielfach beim Einsetzen des Nutsteines von oben her erforderlich ist, u.U. nur unter Schwierigkeiten durchgeführt werden.

Der vorliegenden Erfindung liegt daher die Aufgabe zugrunde, einen Nutstein der gattungsgemäßen Art so zu gestalten, daß er einfach und kostengünstig herstellbar ist, seine Handhabung verbessert und die Montage erleichtert wird.

Diese Aufgabe wird durch einen Nutstein gelöst, der die Merkmale des Anspruches 1 aufweist.

Ein in diesem Sinne ausgebildeter Nutstein ist gegenüber dem bekannten sehr einfach herzustellen. Zum einen kann die Formfeder in einem vollautomatischen Durchlauf als Stanzteil gefertigt werden, das in einem weiteren, automatischen Arbeitsschritt, beispielsweise durch Punktschweißen mit dem Nutstein verbunden wird.

Zum andern wird durch die einstückige Ausbildung, wozu zur Herstellung der Spiralarme lediglich ein entsprechendes Einschneides eines Federstahlbleches erforderlich ist, aus dem dann die Andruckscheibe herausgedrückt und geformt wird, ein Optimum an Federkraft wirksam, die im Funktionsfall, also dann wenn der Nutstein in die Nut eingelegt ist, diesen an die Hinterschneidung der Nut drückt, so daß der Nutstein bis zu seinem Verschrauben sehr fest fixiert ist.

Die in allen Richtungen konvex geformte Andruckscheibe bringt es mit sich, daß der Nutstein richtungsunabhängig in die Nut eingelegt bzw. eingeschwenkt werden kann. Dabei ist die Formfeder im wesentlichen symmetrisch aufgebaut, so daß beim Einsetzen des Nutsteines auf eine besondere Lage der Formfeder keine Rücksicht zu nehmen ist.

Da die Nutsteine üblicherweise eine rechteckförmige Grundfläche aufweisen, die Formfeder andererseits dieser Grundfläche entsprechen sollte, ergibt sich für die Andruckscheibe eine etwa elliptische Grundfläche, wobei diese in ihren Außenabmessungen einschließlich der Spiralarme geringer ist als die zugeordneten Abmaße der Tragplatte. Gegenüber dem Stand der Technik ragen somit keine Formfederteile über den Nutstein hinaus, so daß keine Verhakung einzelner Nutsteine miteinander möglich ist, was naturgemäß eine bessere Handhabung einzelner Nutsteine aus einer Schüttung ermöglicht.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnungen beschrieben.

Es zeigen:
Figur 1 einen erfindungsgemäßen Nutstein in einer Seitenansicht,
Figur 2 den Nutstein in einer Draufsicht.

In den Figuren ist ein Nutstein 2 dargestellt, der in eine hinterschnittene Nut eines nicht gezeigten Profilstabes einführbar ist.

An einer Oberseite des Nutsteines 2 ist eine Formfeder 1, beispielsweise durch Punktschweißen, was durch Schweißpunkte 6 verdeutlicht ist, befestigt.

In Funktionsstellung stützt sich die Formfeder 1 am Grund der hinterschnittenen Nut ab und drückt den Nutstein 2 fixierend gegen die Hinterschneidung der Nut.

Die Formfeder 1 besteht aus einer am Nutstein 2 befestigten Tragplatte 5 sowie daran angeschlossenen, federnden Spiralarmen 4, die eine Andruckscheibe 3 tragen.

Diese abständig zur Tragplatte angeordnete Andruckscheibe 3 ist in jeder Oberflächenrichtung konvex geformt, wobei sich bei einer quadratischen Grundfläche der Tragplatte 1 etwa eine kugelabschnittartige Form ergibt.

Die gesamte Formfeder 1, d.h. die Tragplatte 5, die Spiralarme 4 sowie die Andruckscheibe 3 sind einstückig ausgebildet und vorzugsweise aus einem Federstahlblech gefertigt.

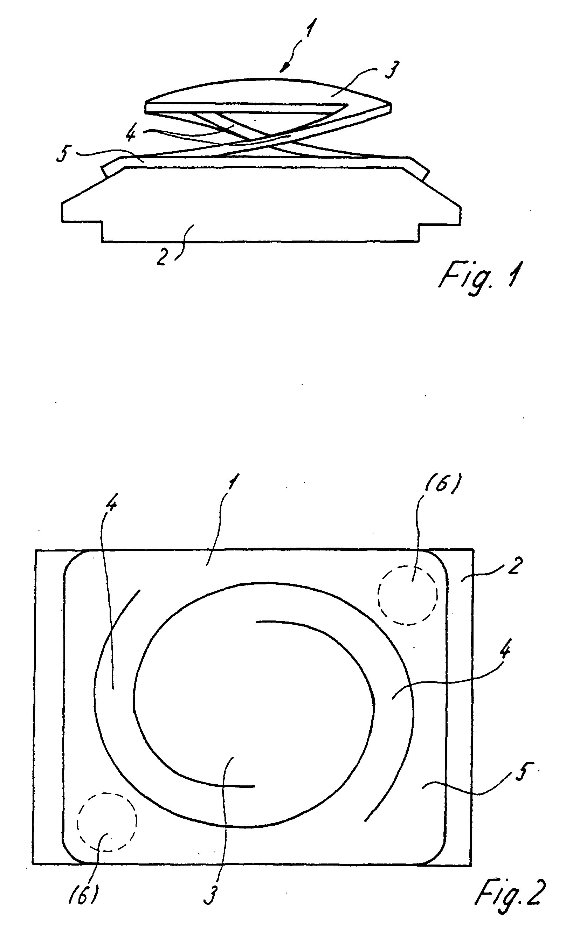

Zur Ausbildung der Spiralarme 4 sind dabei lediglich spiralenförmige Einschnitte (Fig. 2) erforderlich.

Durch anschließendes Drücken bzw. Ziehen wird die konvexe Form der Andruckscheibe 3 erzielt.

Neben der genannten quadratischen Ausbildung der Tragplatte 5 ist selbstverständlich auch eine rechteckige Grundrißform denkbar, wobei dann zweckmäßigerweise die Andruckscheibe 3 eine etwa ovale Grundfläche aufweist.

## Patentansprüche

1. In eine hinterschnittene Nut eines Profilstabes einführbarer Nutstein (2), an dem eine am Nutengrund abstützbare Formfeder (1) befestigt ist, **dadurch gekennzeichnet, daß** die Formfeder (1) eine in jeder Oberflächenrichtung konvex geformte Andruckscheibe (3) aufweist, die über federnde Spiralarme (4) abständig mit einer am Nutstein (2) befestigten Tragplatte (5) verbunden ist, wobei die Tragplatte (5), die Spiralarme (4) und die Andruckscheibe (3) einstückig ausgebildet sind.

2. Nutstein nach Anspruch 1, **dadurch gekennzeichnet, daß** die Formfeder (1) als Stanzteil ausgebildet ist.

3. Nutstein nach Anspruch 2, **dadurch gekennzeichnet, daß** die Spiralarme (4) durch teilweises Einschneiden in ein Federblech gebildet sind.

4. Nutstein nach Anspruch 1, **dadurch gekennzeichnet, daß** die Andruckscheibe (3) eine etwa runde oder etwa elliptische Grundfläche aufweist.

## Claims

1. Sliding block (2) which can be introduced into an undercut groove of a profile bar and on which there is fastened a shaped spring (1). which can be supported on the groove base, **characterized in that** the shaped spring (1) has a pressure-exerting disc (3) which is shaped convexly in every surface direction and is connected, by resilient helical arms (4), to a carrying plate (5), fastened on the sliding block (2), at a distance from said carrying plate, the carrying plate (5), the helical arms (4) and the pressure-exerting disc (3) being designed in one piece.

2. Sliding block according to Claim 1, **characterized in that** the shaped spring (1) is designed as a punched part.

3. Sliding block according to Claim 2, **characterized in that** the helical arms (4) are formed by partially cutting into a spring sheet.

4. Sliding block according to Claim 1, **characterized in that** the pressure-exerting disc (3) has an approximately round or approximately elliptical basic surface area.

## Revendications

1. Coulisseau (2) à introduire dans une rainure détalonnée d'une barre profilée et auquel est fixé un ressort façonné (1) qui peut prendre appui contre le fond de la rainure, **caractérisé en ce que** le ressort façonné (1) présente un disque de pression (3) de forme convexe dans toute direction de surface et qui est relié à distance, par des bras en spirale (4) élastiques, à une plaque de support (5) fixée au coulisseau (2), la plaque de support (5), les bras en spirale (4) et le disque de pression (3) étant réalisés d'une seule pièce.

2. Coulisseau selon la revendication 1, **caractérisé en ce que** le ressort façonné (1) est réalisé sous la forme d'un élément estampé.

3. Coulisseau selon la revendication 2, **caractérisé en ce que** les bras en spirale (4) sont formés par entaille partielle dans une tôle à ressort.

4. Coulisseau selon la revendication 1, **caractérisé en ce que** le disque de pression (3) présente une surface de base approximativement circulaire ou approximativement elliptique.
